# EUROPÄISCHE PATENTANMELDUNG

(11) **EP 0 530 472 A1**
(43) Veröffentlichungstag der Anmeldung: **10.03.1993**
(21) Anmeldenummer: 92111937.6
(22) Anmeldetag: 14.07.1992
(51) Int. Cl.: H04J 3/04, H04L 12/10, B60R 16/02

(54) **Multiplexsystem**

(30) Priorität: 03.08.1991 DE 4125860
(71) Anmelder: ROBERT BOSCH GMBH, 70442 Stuttgart (DE)
(72) Erfinder: Buehren, Harald, Dipl.-Ing. (FH), W-7580 Buehl (DE); Kern, Robert, Dipl.-Ing., W-7595 Sasbachwalden (DE)

(57) **Zusammenfassung**

Es wird ein Multiplexsystem (10) vorgeschlagen, das wenigstens zwei Energieversorgungsleitungen (13, 14) sowie wenigstens eine Datenleitung (15, 16) enthält. An die Leitungen (13, 14, 15, 16) sind Teilnehmer (11, 12) angeschlossen, wobei wenigstens ein erster Teilnehmer (11) Schaltmittel (21) enthält, welche wenigstens eine Energieversorgungsleitung (13, 14) mit einer Energiequelle (17) verbinden. In einer Weiterbildung ist vorgesehen, daß der erste Teilnehmer (11) weitere Schaltmittel (28, 29) enthält, welche die wenigstens eine Datenleitung (15, 16) während des inaktiven Zustands des Multiplexsystems (10) mit einer Ruheenergiequelle (30) verbinden.

## Beschreibung

### Stand der Technik

Die Erfindung geht aus von einem Multiplexsystems nach der Gattung des Hauptanspruchs. Aus der Veröffentlichung von R. DILLENBURG, S. HEINTZ u. E. ZABLER, "Bosch Technische Berichte 5", Band 2, 1975, S. 91 - 96 ist ein Multiplexsystem als Kabelbaumersatz im Kraftfahrzeug bekannt. Das Multiplexsystem enthält an Stromversorgungsleitungen angeschlossene Teilnehmer, die über eine gemeinsame Datenleitung Daten austauschen. Die Teilnehmer sind beispielsweise elektrischen Verbrauchern wie Lampen, Stellantrieben, Sicherheitseinrichtungen und dergleichen zugeordnet. Die elektrischen Verbraucher werden über Schaltstufen, die von signalverarbeitenden Anordnungen der einzelnen Teilnehmer jeweils angesteuert werden, mit den Stromversorgungsleitungen des Multiplexsystems verbunden. Insbesondere die Schaltstufen in Verbindung mit den angeschlossenen Verbrauchern können im ausgeschalteten Zustand einen geringen, ständig vorhandenen Energiebedarf aufweisen, der durch Leckströme bedingt ist.

Der Erfindung liegt die Aufgabe zugrunde, den Ruheenergiebedarf eines Multiplexsystems zu reduzieren.

Die Aufgabe wird durch die im Hauptanspruch angegebenen Merkmale gelöst.

### Vorteile der Erfindung

Das erfindungsgemäße Multiplexsystem weist den Vorteil auf, daß der Energiebedarf im inaktiven Zustand des Systems äußerst gering ist. Lediglich ein Teilnehmer des Systems, dem Schaltmittel zum Verbinden wenigstens einer Stromversorgungsleitung mit einer Energiequelle zugeordnet sind, weist eine Ruheenergieaufnahme für eine signalverarbeitende Anordnung auf, die ein Steuersignal zum Betätigen der Schaltmittel abgibt. Die signalverarbeitende Anordnung, die mit wenigstens einer Datenleitung des Multiplexsystems verbunden ist, entscheidet über die Aktivierung oder Deaktivierung des Systems. Wenigstens diejenigen Teile der signalverarbeitenden Anordnung, welche diese Entscheidung vornehmen, müssen ständig mit Energie versorgt werden.

Die Freischaltung der Energieversorgungsleitungen während des inaktiven Systemzustands erhöht die Sicherheit gegenüber Kurzschlüssen der Energieversorgungsleitungen.

Vorteilhafte Weiterbildungen und Verbesserungen des erfindungsgemäßen Multiplexsystems ergeben sich aus Unteransprüchen.

Besonders vorteilhaft ist es, wenn der Teilnehmer, der die Schaltmittel zum Verbinden der wenigstens einen Stromversorgungsleitung mit einer Energiequelle enthält, weitere Schaltmittel aufweist, welche wenigstens eine Datenleitung des Multiplexsystems mit einer Ruheenergiequelle verbinden, und wenn die anderen Teilnehmer an der wenigstens einen Datenleitung angeschlossene Mittel zur Ruheenergiebereitstellung aufweisen. Mit dieser Maßnahme ist eine Ruheenergieversorgung der Teilnehmer bei abgeschalteter Stromversorgungsleitung möglich.

In einer vorteilhaften Weiterbildung ist vorgesehen, daß die Ruheenergiequelle einen Innenwiderstand aufweist, welcher derart bemessen ist, daß die Teilnehmer auch im inaktiven Zustand des Systems Daten, zumindest solche mit einem vorgegebenen Pegel, über die auf Ruhenergieversorgung geschaltete, wenigstens eine Datenleitung geben können. Mit dieser Maßnahme ist ein einfacher Übergang in den aktiven Zustand des Multiplexsystems möglich.

Eine andere vorteilhafte Weiterbildung des erfindungsgemäßen Multiplexsystems sieht vor, daß das Potential der Ruheenergiequelle oberhalb von dem Potential liegt, das im aktiven Zustand auf der wenigstens einen Datenleitung auftritt. Mit dieser Maßnahme ist eine einfache Ausgestaltung der Mittel zur Ruheenergiebereitstellung in den einzelnen Teilnehmern möglich. Im einfachsten Fall wird lediglich eine Diode benötigt. Die Diode stellt eine Entkopplung der Mittel zur Ruheenergiebereitstellung von der Datenleitung während des normalen Datenaustauschbetriebs sicher.

Weitere vorteilhafte Weiterbildungen des erfindungsgemäßen Multiplexsystems ergeben sich aus weiteren Unteransprüchen in Verbindung mit der folgenden Beschreibung.

### Zeichnung

In einer Figur ist ein erfindungsgemäßes Multiplexsystem anhand eines Blockschaltbilds gezeigt.

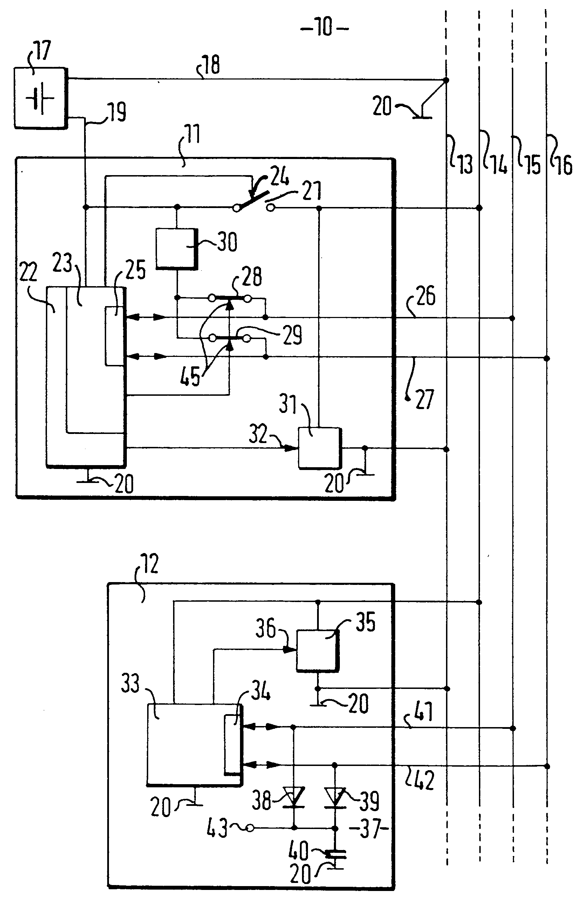

In der Figur ist ein Multiplexsystem 10 gezeigt, das einen ersten Teilnehmer 11 und wenigstens einen weiteren Teilnehmer 12 zeigt, die an Energieversorgungsleitungen 13, 14 sowie an Datenleitungen 15, 16 angeschlossen sind. Zur Energieversorgung des Multiplexsystems 10 ist eine Energiequelle 17 vorgesehen, die über eine erste Verbindungsleitung 18 mit der Energieversorgungsleitung 13 und über eine zweite Verbindungsleitung 19 mit dem ersten Teilnehmer 11 verbunden ist. Die Energieversorgungsleitung 13 ist an eine Gerätemasse 20 geschaltet.

Der erste Teilnehmer 11 enthält Schaltmittel 21, welche die zweite Verbindungsleitung 19 mit der Energieversorgungsleitung 14 verbinden. Die Schaltmittel 21 werden von einer signalverarbeitenden Anordnung 22 angesteuert. Die Anordnung 22 enthält wenigstens einen Teil 23, der über die zweite Verbindungsleitung mit der Energiequelle 17 verbunden ist. Das von der signalverarbeitenden Anordnung 22, 23 abgegebene Steuersignal zum Betätigen der Schaltmittel 21 trägt in der Figur die Bezugszahl 24.

Die signalverarbeitende Anordnung 22, 23 enthält einen Signaleingangs- und Signalausgangsteil 25, der über zwei Datenanschlußleitungen 26, 27 mit den Datenleitungen 15, 16 verbunden ist. Die Datenanschlußleitungen 26, 27 sind weiterhin über weitere Schaltmittel 28, 29 mit einer Ruheenergiequelle 30 verbindbar, die an der zweiten Verbindungsleitung 19 der Energiequelle 17 angeschlossen ist. Die weiteren Schaltmittel 28, 29 werden von der signalverarbeitenden Anordnung 22, 23 angesteuert. Das Steuersignal, das für beide weiteren Schaltmittel 28, 29 gleich sein kann, ist in der Figur mit der Bezugszahl 45 eingetragen.

Der erste Teilnehmer 11 enthält eine Schaltstufe 31, mit der ein in der Figur nicht gezeigter elektrischer Verbraucher beispielsweise ein- und ausgeschaltet werden kann. Die Schaltstufe 31 ist mit der Energieversorgungsleitung 14 sowie mit der Energieversorgungsleitung 13 verbunden. Die Schaltstufe 31 wird von der signalverarbeitenden Anordnung 22, 23 des ersten Teilnehmers 11 angesteuert. Das Steuersignal zum Betätigen der Schaltstufe 31 ist in der Figur mit dem Bezugszeichen 32 eingetragen.

An den Leitungen 13, 14, 15, 16 des Multiplexsystems 10 ist wenigstens ein weiterer Teilnehmer 12 angeschlossen. Der Teilnehmer 12 enthält ebenfalls eine signalverarbeitende Anordnung 33, die ebenfalls ein Signaleingangs- und Signalausgangsteil 34 aufweist. Das Teil 34 ist über Datenausschlußleitungen 41, 42 mit den Datenleitungen 15, 16 verbunden. Der weitere Teilnehmer 12 enthält eine Schaltstufe 35 zum Ein- und Ausschalten eines nicht gezeigten elektrischen Verbrauchers. Die signalverarbeitende Anordnung 33 sowie die Schaltstufe 35 sind jeweils mit den Stromversorgungsleitungen 13, 14 verbunden. Die Schaltstufe 35 wird von der Anordnung 33 angesteuert. Das Steuersignal ist in der Figur mit dem Bezugszeichen 36 eingetragen. Dem weiteren Teilnehmer 12 sind Mittel 37 zur Ruheenergiebereitstellung zugeordnet, die zwei Dioden 38, 39 sowie einen Kondensator 40 enthalten. Die Dioden 38, 39 sind über die Datenanschlußleitungen 41, 42 mit den Datenleitungen 15, 16 verbunden. Der Kondensator 40 ist an Masse 20 geschaltet. Am gemeinsamen Schaltungspunkt der Dioden 38, 39 und des Kondensators 40, der in der Figur das Bezugszeichen 43 trägt, steht die Ruheenergie bereit.

Das erfindungsgemäße Multiplexsystem wird anhand des in der Figur gezeigten Blockschaltbilds näher erläutert.

Das Multiplexsystem 10 enthält mehrere Teilnehmer 11, 12, die an wenigstens einer Energieversorgungsleitung 13, 14 sowie an wenigstens einer Datenleitung 15, 16 anschließbar sind. Die Teilnehmer 11, 12 sind beispielsweise elektrischen Verbrauchern oder beispielsweise Datenquellen oder Datensenken zugeordnet. Prinzipiell sind alle Teilnehmer 11, 12 an beide Stromversorgungsleitungen 13, 14 angeschlossen, wobei in Abhängigkeit von der Realisierung gegebenenfalls nur eine Leitung 13, 14 vorzusehen ist. Die andere Verbindung zur Energiequelle 17 wird in diesen Fällen über eine vorhandene Gerätemasse 20 hergestellt. Von den in der Figur gezeigten zwei Datenleitungen 15, 16 ist ebenfalls wenigstens eine vorgesehen. Die Teilnehmer 11, 12 können über die Datenleitungen 15, 16 Informationen austauschen. Beispielsweise kann von einer Bedieneinheit aus, der ein Teilnehmer 11, 12 zugeordnet ist, ein elektrischer Verbraucher ein- und ausgeschaltet werden, der mit einem anderen Teilnehmer 11, 12 verbunden ist. Ferner können die Teilnehmer 11, 12 Datenquellen und Datensenken zugeordnet sein. Als Datenquelle sind beispielsweise Meßwertaufnehmer vorgesehen, welche die erfaßten Meßwerte über die Datenleitungen 15, 16 zu einem Schalt- oder Regelgerät weiterleiten.

Im Ruhezustand des Multiplexsystems 10, der dem inaktiven Zustand entspricht, bei dem über die Datenleitungen 15, 16 keine Informationen ausgetauscht werden, sind die beispielsweise vorhandenen Schaltstufen 31, 35 ausgeschaltet. In Abhängigkeit von der Schaltungsauslegung können auch im ausgeschalteten Zustand solcher Schaltstufen 31, 35 oder entsprechender anderer, in der Figur nicht gezeigter Anordnungen, die den Teilnehmern 11, 12 zugeordnet sind, Leckströme auftreten, welche die Energiequelle 17 im Ruhezustand des Multiplexsystems 10 belasten.

Erfindunsgemäß ist deshalb vorgesehen, daß der erste Teilnehmer 11 Schaltmittel 21 enthält, welche wenigstens eine Energieversorgungsleitung 13, 14 mit der Energiequelle 17 verbinden. Die signalverarbeitende Anordnung 22, 23 des ersten Teilnehmers 11 entscheidet somit über die zentrale Energieversorgung des Multiplexsystems 10. Die signalverarbeitende Anordnung 22, 23 steuert die Schaltmittel 21 mit dem Steuersignal 24 in Abhängigkeit von in der Anordnung 22, 23 abgelegter Informationen und/oder in Abhängigkeit von den auf den Datenleitungen 15, 16 über das Signaleingangsteil 25 empfangenen Daten. Die Stromversorgung der signalverarbeitenden Anordnung 22 oder wenigstens eines Teils 23 der Anordnung 22 muß deshalb zumindest während der Betriebszeit des Multiplexsystems 10 stets mit der Energiequelle 17 verbunden sein.

In Abhängigkeit von der Ausgestaltung der Teilnehmer 11, 12 kann eine Ruheenergieversorgung einzelner Teilnehmer 11, 12 erforderlich sein. In einer Weiterbildung des erfindungsgemäßen Multiplexsystems 10 ist deshalb eine Verwendung der Datenleitungen 15, 16 zur Energieübertragung während des inaktiven Zustands des Multiplexsystems 10 vorgesehen. Sobald dieser Zustand von der signalverarbeitenden Anordnung 22, 23 des ersten Teilnehmers 11 erkannt wird, veranlaßt das Steuersignal 45 das Betätigen der weiteren Schaltmittel 28, 29. Die Schaltmittel 28, 29 verbinden die Datenleitungen 15, 16 über die Datenanschlußleitungen 26, 27 mit der Ruheenergiequelle 30. Es ist nicht erforderlich, daß die Ruheenergiequelle 30 die Ruheenergie aufbringen kann, es reicht aus, wenn die Energie der Energiequelle 17 von der Ruheenergiequelle 30 lediglich bereitgestellt wird. Während des inaktiven Zustands der Datenleitungen 15, 16 wird in den mit Ruheenergie zu versorgenden weiteren Teilnehmern 12 die Ruheenergie mit Mitteln 37 zur Ruheenergiebereitstellung gewonnen, die über die Datenanschlußleitungen 41, 42 mit den Datenleitungen 15, 16 verbunden sind. Am gemeinsamen Schaltungspunkt 43 kann die Energie entnommen und den entsprechenden Teilen des Teilnehmers 12 zugeleitet werden, die einen Ruheenergiebedarf haben. Einen derartigen Ruheenergiebedarf haben beispielsweise wenigstens Teile der signalverarbeitenden Anordnung 33 des weiteren Teilnehmers 12, die beispielsweise in der Lage sein müssen, ein Energieanforderungssignal über die Datenleitungen 15, 16 zum ersten Teilnehmer 11 zu übertragen. Ferner muß beispielsweise die Abgabemöglichkeit eines von einem dem weiteren Teilnehmer 12 zugeordneten Meßwertaufnehmers gemeldet werden können. Eine Ruheenergie wird beispielsweise auch zum Aufrechterhalten von Speicherinhalten eines Datenspeichers der signalverarbeitenden Anordnung 33 des Teilnehmers 12 benötigt.

In einer vorteilhaften Ausgestaltung des erfindungsgemäßen Multiplexsystems 10 weist die Ruheenergiequelle 30 ein höheres Potential auf als es im inaktiven Zustand auf den Datenleitungen 15, 16 vorliegt. Mit dieser Maßnahme ist eine einfache Entkopplung in den Mitteln 37 zur Ruheenergiebereitstellung zur Trennung der Mittel 37 von den Datenleitungen 15, 16 während des aktiven Zustands möglich. Die Entkopplung ist dann gegeben, wenn der gemeinsame Schaltungspunkt 43, an dem die Ruheenergie abgenommen werden kann, im aktiven Betrieb auf einem Potential liegt, das größer oder zumindest gleich dem Potential auf den Datenleitungen 15, 16 ist. Der Kondensator 40 ist zur Glättung eines gegebenenfalls vorhandenen Wechselspannungsanteils und insbesondere als Energiespeicher vorgesehen.

In einer vorteilhaften Weiterbildung des erfindungsgemäßen Multiplexsystems 10 weist die Ruheenergiequelle 30 einen vergleichsweise hohen Innenwiderstand auf. Der Innenwiderstand ist derart festgelegt, daß das Signalausgangsteil 25, 34 trotz einer bestehenden Verbindung der Datenleitungen 15, 16 mit der Ruheenergiequelle 30 ein Signal innerhalb eines vorgegebenen Potentialbereichs auf die Datenleitungen 15, 16 einprägen kann, das ein signalempfangender Teilnehmer 11, 12 erkennt. Es ist somit möglich, auch während des inaktiven Zustands des Multiplexsystems 10 zumindest eingeschränkt eine Datenübertragung über die Datenleitungen 15, 16 vornehmen zu können.

Die Ruheenergiequelle 30 ist beispielsweise als Spannungsregler oder im einfachsten Fall als an die Energiequelle 17 angeschlossener elektrischer Widerstand realisierbar.

Die Schaltmittel 21, 28, 29 sind vorzugsweise als elektronische Schalter, beispielsweise als Leistungsfeldeffekttransistoren realisiert.

## Patentansprüche

1. Multiplexsystem mit wenigstens zwei Energieversorgungsleitungen, die mit einer Energiequelle verbindbar sind, mit wenigstens einer Datenleitung und mit an die Datenleitung anschließbaren Teilnehmern, dadurch gekennzeichnet, daß wenigstens ein Teilnehmer (11) Schaltmittel (21) enthält, welche wenigstens eine Energieversorgungsleitung (13, 14) mit der Energiequelle (17) verbinden, daß dieser Teilnehmer (11) eine signalverarbeitende Anordnung (22) enthält, die ein Steuersignal (24) zum Betätigen der Schaltmittel (21) abgibt, und daß wenigstens Teile (23) der signalverarbeitenden Anordnung (22) mit der Energiequelle (17) verbunden sind.

2. Multiplexsystem nach Anspruch 1, dadurch gekennzeichnet, daß der Teilnehmer (11) weitere Schaltmittel (28, 29) enthält, welche die Datenleitung (15, 16) mit einer Ruheenergiequelle (30) verbinden, daß die signalverarbeitende Anordnung (22) ein Steuersignal (31) zum Betätigen der weiteren Schaltmittel (28, 29) abgibt und daß wenigstens ein weiterer Teilnehmer (12) Mittel (37) zur Ruheenergiebereitstellung aufweist, die an die Datenleitung (15, 16) anschließbar sind.

3. Multiplexsystem nach Anspruch 1 oder 2, dadurch gekennzeichnet, daß das Potential der Ruheenergiequelle (30) mindestens gleich dem Potential ist, das in einem aktiven Zustand des Multiplexsystems (10) an der Datenleitung (15, 16) zumindest zeitweise vorliegt.

4. Multiplexsystem nach einem der vorhergehenden Ansprüche, dadurch gekennzeichnet, daß die Mittel (37) zur Ruheenergiebereitstellung Dioden (38, 39) enthalten.

5. Multiplexsystem nach einem der vorhergehenden Ansprüche, dadurch gekennzeichnet, daß der Innenwiderstand der Ruheenergiequelle (30) derart festgelegt ist, daß im inaktiven Zustand des Multiplexsystems (10) auf der Datenleitung (15, 16) ein zumindest eingeschränkter Datenaustausch möglich ist.
